# EUROPEAN PATENT SPECIFICATION

(11) **EP 1 259 911 B1**
(45) Date of publication and mention of the grant of the patent: **29.10.2008**
(21) Application number: 00979252.4
(22) Date of filing: 27.11.2000
(51) Int. Cl.: G06F 17/50, B41J 2/175

(54) **AUTOMATIC CONSUMABLES ORDERING**
AUTOMATISCHE BESTELLUNG VON VERBRAUCHSMATERIALIEN
COMMANDE AUTOMATIQUE DE CONSOMMABLES

(30) Priority: 24.02.2000 AU PQ582900
(43) Date of publication of application: 27.11.2002
(73) Proprietor: Silverbrook Research Pty. Limited, Balmain, NSW 2041 (AU)
(72) Inventor: SILVERBROOK, Kia, Silverbrook Research Pty Ltd, Balmain, New South Wales 2041 (AU); LAPSTUN, Paul, Rodd Point, New South Wales 2046 (AU)
(74) Representative: Moore, Barry
(86) International application number: PCT/AU2000/001445
(87) International publication number: WO 2001/063489

(56) References cited:
- EP-A- 0 715 221
- WO-A-96/29578
- US-A- 5 305 199

## Description

### Technical Field

This invention relates to the automatic ordering and delivery of supplies for devices such as printers and the like.

### CO-PENDING APPLICATIONS

Various methods, systems and apparatus relating to the present invention are disclosed in the following co-pending applications filed by the applicant or assignee of the present invention simultaneously with the present invention:
PCT/AU00/01450, PCT/AU00/01453, PCT/AU00/01448, PCT/AU00/01447,
PCT/AU00/01459, PCT/AU00/01451, PCT/AU00/01454, PCT/AU00/01452,
PCT/AU00/01443, PCT/AU00/01455, PCT/AU00/01456, PCT/AU00/01457,
PCT/AU00/01458 and PCT/AU00/01449.

Various methods, systems and apparatus relating to the present invention are disclosed in the following co-pending applications filed by the applicant or assignee of the present invention on 20 October 2000:
PCT/AU00/01273, PCT/AU00/01279, PCT/AU00/01288, PCT/AU00/01282,
PCT/AU00/01276, PCT/AU00/01280, PCT/AU00/01274, PCT/AU00/01289,
PCT/AU00/01275, PCT/AU00/01277, PCT/AU00/01286, PCT/AU00/01281,
PCT/AU00/01278, PCT/AU00/01287, PCT/AU00/01285, PCT/AU00/01284 and PCT/AU00/01283.

Various methods, systems and apparatus relating to the present invention are disclosed in the following co-pending applications filed by the applicant or assignee of the present invention on 15 September 2000:
PCT/AU00/01108, PCT/AU00/01110 and PCT/AU00/01111.

Various methods, systems and apparatus relating to the present invention are disclosed in the following co-pending applications filed by the applicant or assignee of the present invention on 30 June 2000:
PCT/AU00/00762, PCT/AU00/00763, PCT/AU00/00761, PCT/AU00/00760,
PCT/AU00/00759, PCT/AU00/00758, PCT/AU00/00764, PCT/AU00/00765,
PCT/AU00/00766, PCT/AU00/00767, PCT/AU00/00768, PCT/AU00/00773,
PCT/AU00/00774, PCT/AU00/00775,PCT/AU00/00776, PCT/AU00/00777,
PCT/AU00/00770, PCT/AU00/00769, PCT/AU00/00771, PCT/AU00/00772,
PCT/AU00/00754, PCT/AU00/00755, PCT/AU00/00756 and PCT/AU00/00757.

Various methods, systems and apparatus relating to the present invention are disclosed in the following co-pending applications filed by the applicant or assignee of the present invention on 24 May 2000:
PCT/AU00/00518, PCT/AU00/00519, PCT/AU00/00520, PCT/AU00/00521,
PCT/AU00/00522, PCT/AU00/00523, PCT/AU00/00524, PCT/AU00/00525,
PCT/AU00/00526, PCT/AU00/00527, PCT/AU00/00528, PCT/AU00/00529,
PCT/AU00/00530, PCT/AU00/00531, PCT/AU00/00532, PCT/AU00/00533,
PCT/AU00/00534, PCT/AU00/00535, PCT/AU00/00536, PCT/AU00/00537,
PCT/AU00/00538, PCT/AU00/00539, PCT/AU00/00540, PCT/AU00/00541,
PCT/AU00/00547, PCT/AU00/00546, PCT/AU00/00554, PCT/AU00/00556,
PCT/AU00/00557, PCT/AU00/00558, PCT/AU00/00559, PCT/AU00/00560,
PCT/AU00/00561, PCT/AU00/00562, PCT/AU00/00563, PCT/AU00/00564,
PCT/AU00/00565, PCT/AU00/00566, PCT/AU00/00567, PCT/AU00/00568,
PCT/AU00/00569, PCT/AU00/00570, PCT/AU00/00571, PCT/AU00/00572,
PCT/AU00/00573, PCT/AU00/00574, PCT/AU00/00575, PCT/AU00/00576,
PCT/AU00/00577, PCT/AU00/00578, PCT/AU00/00579, PCT/AU00/00581,
PCT/AU00/00580, PCT/AU00/00582, PCT/AU00/00587, PCT/AU00/00588,
PCT/AU00/00589, PCT/AU00/00583, PCT/AU00/00593, PCT/AU00/00590,
PCT/AU00/00591, PCT/AU00/00592, PCT/AU00/00594, PCT/AU00/00595,
PCT/AU00/00596, PCT/AU00/00597, PCT/AU00/00598, PCT/AU00/00516,
PCT/AU00/00517 and PCT/AU00/00511.

### Background Art

Devices such as printers, photocopiers, facsimile machines and the like use consumables such as ink, toner, staples, adhesives and paper. At present replenishing of these consumables involves manual detection of the state of the consumable supply, manual obtaining of the supplies and organizing of the delivery and installation of the supplies.

US 5 305 199 discloses a reprographic machine including an inventory tracking system for monitoring consummable supplies and automatic ordering.

### Disclosure of the Invention

We have proposed in our co-pending application PCT/AU00/00561 a system in which a printer is permanently connected to a network. We call this system the netpage system and printers which are part of the netpage system are referred to as netpage printers. The connection enables automatic processing of supply monitoring and re-supply to occur. Accordingly in one broad form the invention provides a method of supplying a printer according to claim 1.

The monitoring may occur solely in the cartridge or the printer or may occur in the printer and the cartridge.

A "smart" cartridge may monitor the level and signal to the printer when the level of supply is below a threshold. Alternatively the cartridge may merely supply a level value with the printer determining when the threshold has been passed and then signaling the system. In a further alternative all information may be passed to a server which makes decisions as to thresholds and ordering.

The server may store or have access to stored information relating to the machine and/or the user.

The threshold at which a consumable is re-ordered may be static or it may be dynamic, with the usage of the machine being considered in determining the dynamic threshold.

Ordering may be based on past and/or future envisaged printing.

The system may keep track of cartridges used so that supplies of cartridges are delivered in quantities of more than one. This is to reduce the number of deliveries.

Where the printer utilizes more than one consumable, preferably the system considers the current level or the expected level of other consumables when preparing an order for a first consumable. If one or more other consumables needs or is expected to need replacing shortly after a first consumable is replaced, it is sensible to supply all the needed consumables in one order rather than providing two independent orders.

The delivery and the order may include installing part or all of the order in the printer. To this end, the method also includes providing the printer in an enclosure with external access to the consumable cartridges. The enclosure may be a building. The method includes providing a lockable access panel to the consumable cartridges and, preferably, includes dynamically providing an access code to both the lock and a delivery person.

### Brief Description of the Drawings

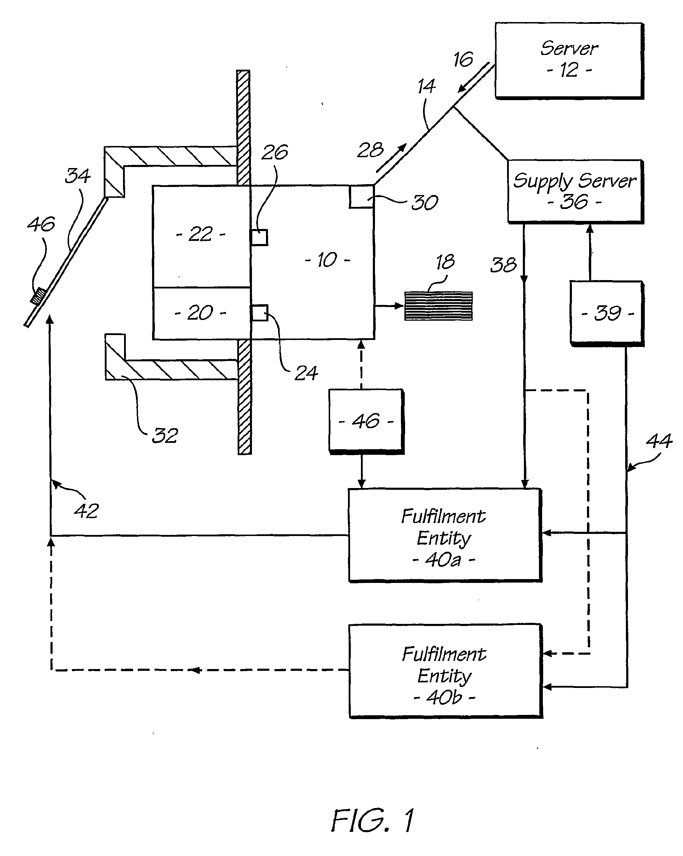

Fig. 1 shows a schematic of a printing and ordering according to an embodiment of the invention;

### Best Mode of Carrying out the Invention

Referring to Fig. 1 there is shown a printer 10 connected to a server 12 via a network 14. The server is in two-way communication with the printer and may send print data 16 to the printer for printing of documents 18. For a full explanation of the netpage system, see our earlier application PCT/AU00/00560.

The printer includes one or more paper cartridges 20 and one or more ink or toner cartridges 22 which are used in production of the printed documents 18. There may be a single paper cartridge or there may be multiple paper cartridges, each with the same or different sizes of paper. A cartridge may include both paper and ink. The printer 10 is preferably an inkjet type device, preferably a MEMS inkjet type device but other types of printer may be used. For a full explanation of MEMS inkjet devices, reference is made to our co-pending patent application PCT/AU00/00578. The printer may be a color or a black &white printer. As such the ink/toner cartridge may comprise a single ink/toner or multiple inks/toners. Where the printer uses multiple inks/toners, separate cartridges may be provided for each different ink/toner or one or more cartridges incorporating two or more different inks/toners may be used. Typically a color inkjet printer may have a separate black ink cartridge and a separate three-color ink cartridge.

Each cartridge is monitored by one or more sensors and in the embodiment shown there is a paper sensor 24 and an ink sensor 26. The sensors may be simple boolean type sensors providing a "true" signal until the level of ink falls below a pre-set level, at which point a "false" signal is generated. Alternatively the sensors may provide an output representing the quantity of the respective supply remaining. There may be a single sensor for each cartridge or multiple sensors for each cartridge. For example an ink cartridge may include three or four different inks and the amount of each ink remaining will usually need to be monitored. As such a three-color ink cartridge will preferably have three monitors associated with it. There may be more than one sensor for each consumable, particularly where boolean type sensors are used. For example, a first sensor may indicate when ink is low and a second sensor may indicate when the ink has run out.

The sensors for each cartridge may be incorporated in the printer 10, or the cartridges 20, 22, as desired. The sensors 24/26 may monitor the level of the respective supply directly or indirectly. The MEMS printheads typically contain circuitry to determine if an individual inkjet device has ink or not and such circuitry may be used to determine if the ink supply has run out. Another way of monitoring ink or paper supply is to make assumptions as to the initial quantity of each consumable and decrement a counter, as printing occurs, making assumptions as to how much ink is used with each print job.

The counter may be maintained in memory (typically non-volatile memory) in the corresponding cartridge. Similarly the assumption as to the initial quantity of a consumable may be based on information obtained from the cartridge.

The sensors 24/26 communicate with a controller 30. The sensors may be "dumb" sensors which merely provide a signal to the controller 30 and the controller determines the level of the monitored supply. Alternatively the sensors may be "smart" and provide more than simple information to the controller. The sensors may communicate with the respective cartridge to determine the original quantity and the respective supply. Alternatively the cartridge may communicate this information to the controller 30. Where the printer only accepts a single paper cartridge and/or a single ink/toner cartridge the information relating to the cartridge may be incorporated into the sensors or the controller. This may be by hardware or by using non-volatile memory such as EEPROMS.

During use of the printer, the level of paper or ink will fall below a preset threshold and the sensors and/or controller will determine that the amount of the respective consumable has fallen below that threshold. The threshold may be static or dynamic and may be set by the user or the system where the threshold is dynamic. This may be based on past usage patterns and/or expected future usage. The threshold may be when, for instance, 10% of the relative consumable remains or when 0% remains, or any other value. The controller 30 generates a low consumable notification 28 for one or more of the respective cartridges and sends this to a supply server 36. The supply server 36 and the print server 12 may be on the same physical computer or may be on physically distinct computers.

The low consumable notification 28 preferably includes information identifying the printer 10, the consumable required and optionally the urgency or priority of the need. Where the printer only has a single user replaceable cartridge, such as a combined paper and ink/toner cartridge, then the low consumable notification 28 need not necessarily include information identifying the consumable needed.

The supply server 36 receives the low consumable notification 28 and, if appropriate, creates an order request 38 based on the low consumable notification 28 and optionally information 39 pertaining to the printer 10 and/or its "owner" stored on the system. This information 39 may be stored locally or remotely of the supply server 36.

The order request 38 is then transmitted to a fulfillment entity 40. There may be a single fulfillment entity which provides all supplies for the printer or there may be multiple fulfillment entities. The order request 38 is sent to the appropriate fulfillment entity 40.

Where there is a single fulfillment entity the supply server 36 may be part of the fulfillment entity. Each fulfillment entity may have one or more physical locations and orders may be routed externally or internally to the most appropriate physical location.

The order request 38 may include all information required to fulfil the order request, such as supply type, quantity, delivery address, delivery instructions, etc. Alternatively the order request may be the equivalent of "printer X needs paper". In these circumstances the selected fulfillment entity may extract information relating to the user and/or printer from the database 39, as indicated by lines 44.

The fulfillment entity 40 processes the order and dispatches the order to the printer's physical location. Preferably the printer 10 is installed in or on an externally accessible wall 32 and an external access panel 34 is provided. The access panel 34 provides access to the cartridges 20, 22 of the printer but no access to the building in which the printer is installed. The access panel 34 is preferably provided with a lock 45 such that only authorized personnel may open the panel 34 and gain access to the cartridges. The lock may be static, in having a key or fixed access code to unlock. Alternatively the lock may have a dynamically assigned access code, such that access is allowed on a one-time basis for each order. In this case, on completion of order preparation, an access code 46 is generated which is provided over the network to the printer and lock, and separately to the delivery person. The access code may be generated by the fulfillment entity or the supply server and is preferably only transmitted to the printer after order preparation has been completed. The access code may have a limited life, such that if not used within a preset time it expires, requiring generation of a new access code.

As mentioned above, the order fulfillment stage may involve installing the relevant cartridge or cartridges in the printer or merely delivering the supplies to the physical location, with the user installing the respective cartridges.

Where the user installs cartridges, the order can be configured to supply multiple cartridges to reduce the number of deliveries required. For example, a delivery of paper may include five paper cartridges. The printer may detect when a paper cartridge has run out and is replaced and send a signal to the supply server. The supply server keeps count of cartridges supplied and used, so that when the user installs the second last paper cartridge an order for another five cartridges may be initiated. The paper cartridges may be provided with unique identifiers which are sensed and transmitted when installed in the printer. The paper level sensor 24 may be used for sensing when a paper cartridge is replaced or for detecting a cartridge 20 or a separate sensor or sensors may be used.

As mentioned the supply request 28 may include a priority or urgency level. For example the sensors may detect when the ink supply level is low and send an "ordinary" supply request. In the event that the cartridge runs out of ink before it is replaced an "urgent" supply request may then be sent.

The supply server may generate required delivery dates or urgency levels in the order requests 38 sent to fulfillment entities based on the printer and user information 39 and the number of print jobs 16 printed.

The printer 10 may send an ink low message to the supply server 36. If the user is a low volume user of the printer then the supply server may determine from past and planned usage that the ink supply will last another 10 days. Accordingly a delivery can be arranged to occur, for example, 9 or 10 days later, so as to avoid wastage of ink whilst ensuring no break in service to the customer. In contrast, a high volume user may require a delivery to occur as soon as possible. Of course, customers may wish to have delivery sooner than necessary, which the suppliers may provide at additional cost.

The printer or sensors may periodically send status signals to the supply server. Preferably the status of all monitored supplies is combined in a single transmission to reduce network traffic. The status signal or signals may be initiated by the printer or cartridge or the supply server may poll the printer for its status. The supply server may utilize the status of each consumable to determine if the level of the consumable has fallen below the relevant threshold, rather than the printer or cartridge doing so. In an alternate embodiment, the printer or cartridges are supplied with sensors which provide an output corresponding to the level of the supply rather than relying on a threshold level.

By providing the supply server with information relating to the level of all supplies, the supply server can configure orders to pre-empt additional requests. As an example, the printer's paper supply may need to be replenished within the next week. The ink supplies may be sufficient for two weeks of printing. If ordering is based only on thresholds, an order for paper would be generated and then an order for ink a short time later. By noting that the ink supply is becoming low, a single order for paper and ink may be made, even though the ink level has not yet reached the threshold.

The present invention has been described with reference to a preferred embodiment and number of specific alternative embodiments. The scope of the invention is only limited by the attached claims.

## Claims

1. A method of supplying a printer (10) which uses a first consumable (20,22), said printer comprising an enclosure for the first consumable and at least one access panel (34) in the enclosure, the method including:
a) monitoring the level of the first consumable;
b) determining when the level has fallen below a threshold utilizing the monitored level;
c) generating an order for said first consumable when the level has fallen below the threshold; and
d) compiling and delivering the ordered first consumable, wherein said delivering includes installing at least part of the ordered consumable in the enclosure via the access panel,
**characterized in that:**
a lock (45) is provided on the one or more access panels and said delivering includes providing a key (46) for the lock, wherein the lock is dynamically changeable and the method includes changing the key for the lock and providing the changed key for the lock.

2. The method of claim 1 wherein step d) includes installing at least some of the first consumable ordered.

3. The method of claim 1 or claim 2 further including storing user details and generating an order includes extracting some of the user details.

4. The method of any one of the preceding claims wherein the order includes a required delivery date.

5. The method of claim 4 further including storing details of past usage and/or expected usage and the required delivery date is based at least in part on past usage or expected usage or both.

6. The method of claim 3 wherein the order has a size based on user details.

7. The method of any one of the preceding claims wherein the order includes data indicative of an urgency level.

8. The method of any one of the preceding claims including monitoring different thresholds for the consumable and generating signals with information relating to the threshold and/or an urgency level as the level falls below each respective threshold.

9. The method of any one of the preceding claims further including providing the machine with an enclosure and at least one access panel in the enclosure to enable the first consumable to be supplied to the machine and the step of delivering the order includes installing at least part of the ordered consumable in the machine.

10. The method of any one of the preceding claims wherein the consumable is supplied in a cartridge and replacement of the cartridge is detected.

11. The method of claim 10 wherein a running count of cartridges supplied and used is kept and an order is generated when the number of supplied but unused cartridges falls below a threshold.

12. The method of claim 10 or claim 11 wherein each cartridge includes information indicative of a unique identity.

## Patentansprüche

1. Verfahren zum Beliefern eines Druckers (10), der ein erstes Verbrauchsmaterial (20,22) verwendet, wobei der Drucker ein Gehäuse für das erste Verbrauchsmaterial und zumindest eine Zugangsplatte (34) in dem Gehäuse umfasst, wobei das Verfahren einschließt:
a) Überwachen des Füllstands des ersten Verbrauchsmaterials;
b) Bestimmen, wann der Füllstand unter einen Schwellenwert gefallen ist unter Verwenden des überwachten Füllstandes;
c) Veranlassen einer Bestellung für das erste Verbrauchsmaterial, wenn der Füllstand unter den Schwellenwert gefallen ist; und
d) Sammeln und Zuliefern des bestellten ersten Verbrauchsmaterials, wobei das Zuliefern das Installieren von zumindest einem Teil des bestellten Verbrauchsmaterials in dem Gehäuse über die Zugangsplatte einschließt,
**dadurch gekennzeichnet, dass:**
ein Schloss (45) auf der einen oder den mehreren Zugangsplatten bereitgestellt wird und das Zuliefern das Bereitstellen eines Schlüssels (46) für das Schloss einschließt, wobei das Schloss dynamisch änderbar ist und das Verfahren das Ändern des Schlüssels für das Schloss und das Bereitstellen des geänderten Schlüssels für das Schloss einschließt.

2. Verfahren nach Anspruch 1, wobei Schritt d) das Installieren von zumindest einem Teil des bestellten ersten Verbrauchsmaterials einschließt.

3. Verfahren nach Anspruch 1 oder Anspruch 2, welches ferner das Speichern von Benutzerangaben einschließt, und wobei das Veranlassen einer Bestellung das Heranziehen einiger der Benutzerangaben einschließt.

4. Verfahren nach einem der vorhergehenden Ansprüche, wobei die Bestellung ein erforderliches Lieferdatum einschließt.

5. Verfahren nach Anspruch 4, welches ferner das Speichern von Angaben über den früheren Verbrauch und/oder den erwarteten Verbrauch einschließt und das erforderliche Lieferdatum zumindest teilweise auf dem früheren Verbrauch oder dem erwarteten Verbrauch oder auf beidem beruht.

6. Verfahren nach Anspruch 3, wobei die Bestellung eine Größe aufweist, die auf Benutzerangaben beruht.

7. Verfahren nach einem der vorhergehenden Ansprüche, wobei die Bestellung Daten einschließt, die einen Dringlichkeitsfüllstand anzeigen.

8. Verfahren nach einem der vorhergehenden Ansprüche, welches das Überwachen von verschiedenen Schwellenwerten für das Verbrauchsmaterial und das Veranlassen von Signalen mit Informationen in Bezug auf den Schwellenwert und/oder einen Dringlichkeitsfüllstand einschließen, wenn der Füllstand unter den jeweiligen Schwellenwert fällt.

9. Verfahren nach einem der vorhergehenden Ansprüche, welches ferner einschließt, das Gerät mit einem Gehäuse und zumindest einer Zugangsplatte in dem Gehäuse bereitzustellen, um zu ermöglichen, dass das Gerät mit dem ersten Verbrauchsmaterial beliefert wird, wobei der Schritt des Zulieferns der Bestellung das Installieren von zumindest einem Teil des bestellten Verbrauchsmaterials in dem Gerät einschließt.

10. Verfahren nach einem der vorhergehenden Ansprüche, wobei das Verbrauchsmaterial in einer Kassette geliefert wird und der Austausch der Kassette registriert wird.

11. Verfahren nach Anspruch 10, wobei eine fortlaufende Zählung der gelieferten und verwendeten Kassetten durchgeführt und eine Bestellung veranlasst wird, wenn die Anzahl an gelieferten noch unbenutzten Kassetten unter einen Schwellenwert fällt.

12. Verfahren nach Anspruch 10 oder Anspruch 11, wobei jede Kassette eine Information einschließt, die deren einzigartige Identität anzeigt.

## Revendications

1. Procédé d'alimentation d'une imprimante (10) qui utilise un premier consommable (20, 22), ladite imprimante comprenant une enceinte pour le premier consommable et au moins un panneau d'accès (34) dans l'enceinte, le procédé comprenant les opérations consistant à :
a) surveiller le niveau du premier consommable ;
b) déterminer lorsque le niveau est tombé au-dessous d'un seuil en utilisant le niveau surveillé ;
c) générer une commande pour ledit premier consommable lorsque le niveau est tombé au-dessous du seuil ; et
d) rassembler et distribuer le premier consommable commandé, ladite distribution comprenant l'installation d'au moins une partie du consommable commandé dans l'enceinte par l'intermédiaire du panneau d'accès,
**caractérisé par le fait que** :
une serrure (45) est disposée sur le panneau d'accès ou les différents panneaux d'accès et ladite distribution comprend la disposition d'une clef (46) pour la serrure, la serrure étant apte à être changée de façon dynamique et le procédé comprenant le changement de la clef pour la serrure et la disposition de la clef changée pour la serrure.

2. Procédé selon la revendication 1, dans lequel l'étape d) comprend l'installation d'au moins une partie du premier consommable commandé.

3. Procédé selon la revendication 1 ou la revendication 2, comprenant en outre le stockage des particularités d'utilisateur et la génération d'une commande comprend l'extraction d'une partie des particularités d'utilisateur.

4. Procédé selon l'une quelconque des revendications précédentes, dans lequel la commande comprend une date de distribution requise.

5. Procédé selon la revendication 4, comprenant en outre le stockage de particularités de l'usage passé et/ou de l'usage attendu et la date de distribution requise est basée au moins en partie sur l'usage passé ou l'usage attendu ou les deux.

6. Procédé selon la revendication 3, dans lequel la commande a une dimension basée sur les particularités d'utilisateur.

7. Procédé selon l'une quelconque des revendications précédentes, dans lequel la commande comprend des données indicatives d'un niveau d'urgence.

8. Procédé selon l'une quelconque des revendications précédentes, comprenant la surveillance de différents seuils pour le consommable et la génération de signaux avec des informations se rapportant au seuil et/ou un niveau d'urgence lorsque le niveau tombe au-dessous de chaque seuil respectif.

9. Procédé selon l'une quelconque des revendications précédentes, comprenant en outre l'opération consistant à doter la machine d'une enceinte et d'au moins un panneau d'accès dans l'enceinte pour permettre au premier consommable d'être introduit dans la machine, et l'étape de distribution de la commande comprend l'installation d'au moins une partie du consommable commandé dans la machine.

10. Procédé selon l'une quelconque des revendications précédentes, dans lequel le consommable est fourni dans une cartouche et le remplacement de la cartouche est détecté.

11. Procédé selon la revendication 10, dans lequel une totalisation de cartouches fournies et utilisées est conservée et une commande est générée lorsque le nombre de cartouches fournies mais non utilisées tombe au-dessous d'un seuil.

12. Procédé selon la revendication 10 ou la revendication 11, dans lequel chaque cartouche comprend des informations indicatives d'une identité unique.
